# EUROPEAN PATENT APPLICATION

(11) **EP 0 958 958 A2**
(43) Date of publication of application: **24.11.1999**
(21) Application number: 99109170.3
(22) Date of filing: 10.05.1999
(51) Int. Cl.: B60N 2/00

(54) **Load transferring connection system**

(30) Priority: 20.05.1998 NO 982320
(71) Applicant: NORSK HYDRO A/S, 0240 Oslo 2 (NO)
(72) Inventor: Seim, Sindre, 27400 Louviers (FR)
(74) Representative: Patentanwälte Leinweber & Zimmermann

(57) **Abstract**

Load transferring connection system (1) comprises an intermediate distance member (2) introduced between two structural members (3,3') to be interconnected provided internally with fastening members (4), said fastening members further accommodating fixture means (5).

## Description

The present invention relates to a load transferring connecting system, and more particularly to connectors for fastening structural members, e.g. seats, to a vehicle floor.

The introduction of so-called multipurpose vehicles created a challenge to the designer of the vehicle coupes with regard to demands to a flexible and easily convertible system of location and rearrangement (removal) of seats.

Another problem facing the designers is to provide for simple, strong but cost and weight efficient solutions with regard to fastening of seats to the vehicle floor in a certain height (distance) from the floor.

The vehicle floor is presently/customarily provided as a deep drawn/reshaped steel plate with some limitations with regard to acceptable wall thickness being a compromise between requests to the rigidity/strength of the floor, weight and the possibility of reshaping the sheet into a functional structural configuration.

Known solutions based on overcoming the above identified problems by reinforcing the floor sheet by means of reinforcing plates, beams etc., apart from the necessity of using several components and a complicated time consuming assembly, do not satisfy the demand for lowering the weight of the vehicle.

Consequently, it is an object of the present invention to provide a novel load transferring connecting system avoiding/eliminating the above drawbacks of the commercially available solutions and more particularly to provide a system ensuring a controlled even distribution of load (forces) transferred between the interconnected structural members.

A further object of the present invention is to provide a system requiring a minimum of machining and thus waste of material and offering a simple assembly.

Another object of the invention is to achieve a high level of assembly integration based on application of easily provided components of complicated configuration.

These and other objectives are achieved by provision of the new system according to the present invention, as it appears from the attached patent claims 1-5.

The invention will be described in details in the following by way of examples under reference to the accompanying drawings, Figures 1-4, where
- Fig. 1: is a schematical perspective view of the system according to the invention,
- Fig. 2: illustrates schematically a preferred embodiment of a fastening member being usable as a structural component of the system,
- Fig. 3: is a schematical illustration of another embodiment of the fastening member, and finally
- Fig. 4: illustrates another embodiment of the fastening member provided with an auxiliary supporting function.

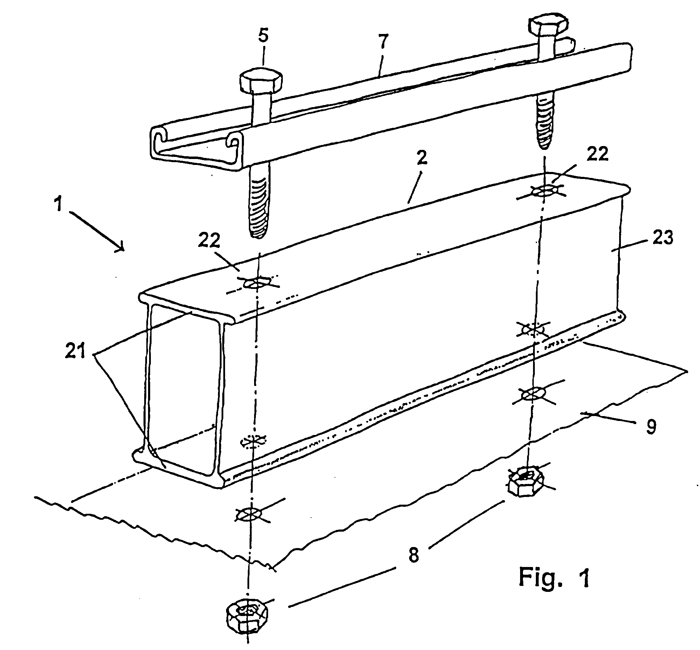

Referring to the drawings, and particularly to Figure 1, the novel load transferring connecting system 1 comprises an intermediate distance member 2 shown as an extruded hollow (chamber) shape defined by a longitudinally extending pair of walls 21 provided with apertures 22 and a pair of vertical connecting (side) walls 23 defining the cavity.

The distance member is introduced/located between the structural members to be connected, in this particular case between a seat rail 7 and the vehicle floor 9. A couple of fixture means (screws) 5 illustrate the principle of connection by connecting the two structural members 7,9 via fixture bolts having threaded bottom parts adapted to co-operate with a pair of screw nuts 8, the fixture bolts extending through the whole height of the distance member 2.

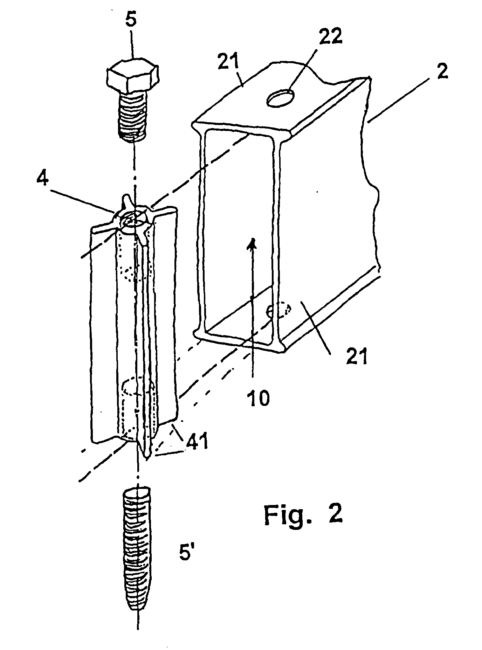

Figure 2 illustrates schematically and in a partial perspective view the novel component of the load transferring system according to the present invention - an extruded fastening member 4 shown prior to deployment into the cavity 10 of the intermediate distance member 2 between the aligned apertures 22 provided in the logitudinally extending pair of walls 21. This preferred embodiment of the fastening member 4 is provided as hollow shape extruded in Al-alloy and having further co-extruded laterally extending flanges 41 reinforcing the fastening member 4, increasing the strength/rigidity of the system.

In this particular case, instead of through extending single bolts 5 shown in Figure 1, thanks to the reinforcement of the fastening member and the possibility to provide an internal shread, it is possible to apply two screw-fixture members 5,5' for fastening/connection to the seat rail and the vehicle floor, respectively (not shown in the Figure).

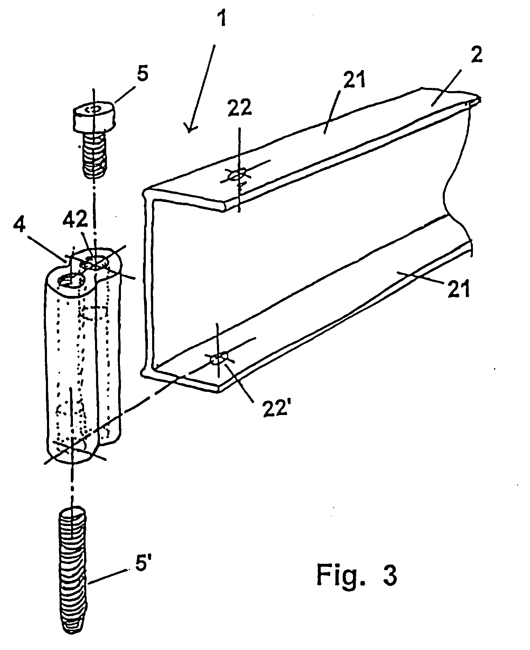

Another embodiment of the connecting system 1 is schematically illustrated in Figure 3. The previously shown closed (hollow) chamber of the intermediate distance member 2 (Figs. 1,2) is exchanged with an "open" U-shaped extrusion 2 having apertures 22,22' in the walls 21 **not** aligned with each other in order to cope with possible space or functional demands for such arrangement. Accordingly, thanks to the flexibility of the present connection system the fastening member 4 is provided as a multichamber extruded shape exhibiting two parallelly longitudinally extending chambers 42 accommodating the screw configurated bolt 5 and the bottom (lower) fastening fixture member 5', respectively.

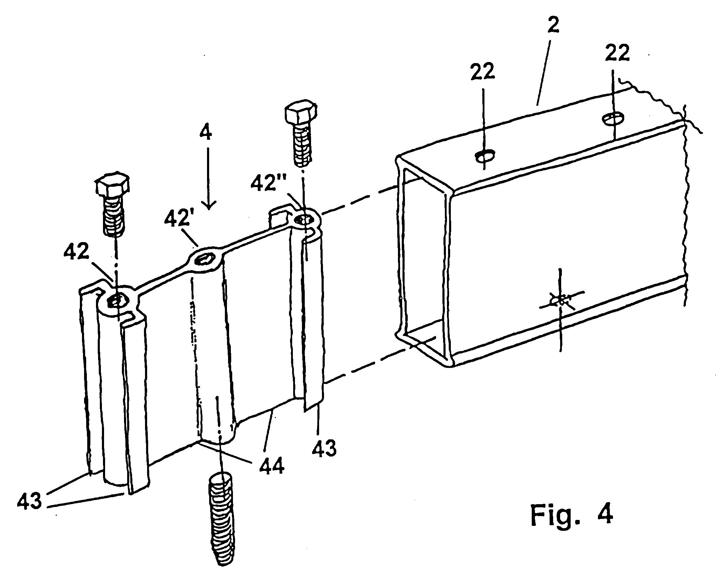

Finally, Figure 4 illustrates schematically still another embodiment of the fastening member 4 usable in the load transferring connecting system according to the present invention. Taking advantage of the flexibility of providing complex/intricate cross-sectional configuration being inherent to the process of extrusion of shapes in aluminium or Al-alloy material the shown three chambers 42,42',42'' of the fastening member 4 connected together by centrally located connecting part/plate 44 are further provided with a laterally longitudinally extending pair of flanges 43 providing for additional support and reinforcement of the intermediate member of the system 1.

## Claims

1. Load transferring connecting system (1), and more particularly a connector for fastening structural members to a vehicle floor, the system comprising an intermediate distance member (2) introduced between structural members (3,3') to be connected together, the distance member (2) being preferably a hollow (extruded) shape, and one or more (several) fastening members (4) extending substantially vertically through apertures (22) provided in the respective parallelly extending walls (21) of the distance member, said fastening members (4) further providing accommodation and support for fixture means (bolts) (5) ensuring (controlled)/(even) distribution of forces (load) transferred between the connected members (3,3').

2. System according to claim 1,
**characterized in that**
the fastening members (4) are provided as hollow members extruded in Al-alloy.

3. System according to claim 1 or 2,
**characterized in that**
the fastening members (4) are further externally/internally threaded to co-operate with screw configurated fixture means (5,5').

4. System according to claim 1, 2 or 3,
**characterized in that**
the apertures (22) are aligned (co-axially arranged) to accommodate fixture means (5) extending through the whole height of the distance member (2).

5. System according to one or more preceding claims,
**characterized in that**
the fastening members (4) are multichamber extruded shapes further provided with laterally extending (protruding) flanges (41).
